# EUROPÄISCHE PATENTSCHRIFT

(11) **EP 3 625 599 B1**
(45) Veröffentlichungstag und Bekanntmachung des Hinweises auf die Patenterteilung: **17.07.2024**
(21) Anmeldenummer: 18730636.0
(22) Anmeldetag: 02.05.2018
(51) Int. Cl.: G02B 6/42

(54) **PHOTONISCHES BAUELEMENT UND VERFAHREN ZU DESSEN HERSTELLUNG**
PHOTONIC COMPONENT AND METHOD FOR PRODUCTION THEREOF
COMPOSANT PHOTONIQUE ET SON PROCÉDÉ DE FABRICATION

(30) Priorität: 19.05.2017 DE 102017208523
(43) Veröffentlichungstag der Anmeldung: 25.03.2020
(73) Patentinhaber: Sicoya GmbH, 12489 Berlin (DE)
(72) Erfinder: MEISTER, Stefan, 12587 Berlin (DE); GREHN, Moritz, 10245 Berlin (DE); OTTE, Sven, 16540 Hohen Neuendorf (DE); H LL, Sebastian, 13359 Berlin (DE)
(74) Vertreter: Fischer, Uwe
(86) Internationale Anmeldenummer: PCT/DE2018/200042
(87) Internationale Veröffentlichungsnummer: WO 2018/210383

(56) Entgegenhaltungen:
- WO-A1-2012/158671
- WO-A1-2016/140855
- WO-A1-2016/148896
- JP-A- 2011 017 925
- JP-A- 2011 017 928
- US-A1- 2006 280 410
- US-A1- 2016 282 570

## Beschreibung

Die Erfindung bezieht sich auf ein photonisches Bauelement mit einem photonisch integrierten Chip und einer mit dem photonisch integrierten Chip mechanisch verbundenen Faserhalterung, wobei die Faserhalterung aufweist: zumindest eine Nut, in die eine optische Faser, insbesondere Monomodefaser, eingelegt ist, und zumindest eine Spiegelfläche, die Strahlung der Faser in Richtung des photonisch integrierten Chips und/oder Strahlung des photonisch integrierten Chips in Richtung der Faser spiegelt. Ein derartiges Bauelement ist aus der deutschen Patentschrift DE 44 45 997 und auch aus der japanischen Druckschrift JP 2011 017928 A bekannt.

Andere optische Bauelemente sind in den Druckschriften JP 2011 017925 A, WO 2016/148896 A1, US 2006/280410 A1, WO 2016/140855 A1, WO 2012/158671 A1 und US 2016/0282570 A1 offenbart.

Der Erfindung liegt die Aufgabe zugrunde, ein photonisches Bauelement anzugeben, das sich kostengünstig fertigen lässt und einen möglichst kompakten Aufbau aufweist.

Diese Aufgabe wird erfindungsgemäß durch ein photonisches Bauelement mit den Merkmalen gemäß Patentanspruch 1 gelöst. Vorteilhafte Ausgestaltungen des erfindungsgemäßen Bauelements sind in Unteransprüchen angegeben.

Ein wesentlicher Vorteil des erfindungsgemäßen Bauelements ist darin zu sehen, dass der Chipstapel, die Durchgangslöcher und die Führungsstifte gemeinsam eine einfache, automatische Justage der Faserhalterung ermöglichen, insbesondere beispielsweise mit Blick auf eine oder mehrere Linsen im Strahlweg zwischen der Faserhalterung und dem photonisch integrierten Chip.

Mit Blick auf eine einfache Justage bezüglich des photonisch integrierten Chips wird es als vorteilhaft angesehen, wenn durch die zumindest zwei Durchgangslöcher des Chipstapels jeweils ein Führungsstift hindurchgeführt ist, der sich in ein zugeordnetes Positionierloch in der Faserhalterung und ein zugeordnetes Positionierloch in dem photonisch integrierten Chip erstreckt und den photonisch integrierten Chip, den Chipstapel und die Faserhalterung relativ zueinander positioniert.

Die Durchgangslöcher des Chipstapels und die zugeordneten Positionierlöcher fluchten vorzugsweise.

Die Positionierlöcher in der Faserhalterung sind vorzugsweise Durchgangslöcher; diese Ausgestaltung ermöglicht ein Einführen der Führungsstifte von außen in die Faserhalterung hinein.

Mit Blick auf die Strahlführung optischer Strahlung zwischen der Faserhalterung und dem photonisch integrierten Chip wird es als vorteilhaft angesehen, wenn der Chip des Chipstapels, der an die Faserhalterung grenzt, an seiner der Faserhalterung zugewandten Chipseite mit mindestens einer Linse, nachfolgend erste Linse des Chipstapels genannt, versehen ist, der Chip des Chipstapels, der an den photonisch integrierten Chip grenzt, an seiner dem photonisch integrierten Chip zugewandten Chipseite ebenfalls mit mindestens einer Linse, nachfolgend zweite Linse des Chipstapels genannt, versehen ist und die erste und zweite Linse einen gemeinsamen Strahlweg durch den Chipstapel begrenzen.

Die erste und zweite Linse liegen vorzugsweise einander gegenüber.

Die Abweichung zwischen der optischen Weglänge zwischen der Linsenoberfläche der ersten Linse und der Faser und der optischen Weglänge zwischen der Linsenoberfläche der zweiten Linse und einem Koppler des photonisch integrierten Chips ist vorzugsweise kleiner als 5 % und/oder kleiner als die doppelte Rayleighlänge des durch die erste Linse fokussierten Strahls.

Die Chips des Chipstapels, des photonisch integrierten Chips und die Faserhalterung sind bevorzugt Siliziumchips.

Der Chipstapel weist vorzugsweise zumindest einen Zwischenchip auf, der zwischen den beiden bereits erwähnten äußeren Chips des Chipstapels angeordnet ist und ebenfalls zumindest zwei zugeordnete Durchgangslöcher für die Führungsstifte aufweist. Die Dicke des Zwischenchips beträgt vorzugsweise mindestens 500 µm, damit der Steckkontakt für die Führungsstifte genug Tiefe vorhält, so dass der Steckvorgang für einen Anwender gut fühlbar ist.

Der oder die Zwischenchips bilden bevorzugt einen Bestandteil des Steckers oder der Steckeraufnahme.

Die auf der Steckeraufnahme aufliegende Steckerfläche des Steckers ist bevorzugt plan, wobei die Steckerfläche durch die der Steckeraufnahme zugewandte Oberfläche desjenigen Chips, der an die Faserhalterung grenzt, oder des oder eines der Zwischenchips gebildet ist.

Die auf dem Stecker aufliegende Fläche der Steckeraufnahme ist vorzugsweise plan, wobei diese Fläche durch die dem Stecker zugewandte Oberfläche desjenigen Chips, der an den photonisch integrierten Chip grenzt, oder des oder eines der Zwischenchips gebildet ist.

Besonders vorteilhaft ist es, wenn die inneren, aufeinander liegenden Flächen der Chips des Chipstapels plan sind und die erste und zweite Linse in die Oberflächen auf den Außenseiten des Chipstapels eingebracht, insbesondere eingeätzt sind.

Die beiden Linsen weisen vorzugsweise die gleiche Fokuslänge auf. Besonders bevorzugt sind sie identisch.

Der Chip, der an die Faserhalterung grenzt, und der Chip, der an den photonisch integrierten Chip grenzt, sind mit Blick auf eine geringe Teilezahl und niedrige Herstellungskosten vorzugsweise identisch.

Bezüglich der Linsenausgestaltung wird es als vorteilhaft angesehen, wenn die erste Linse des Chipstapels derart ausgebildet ist, dass Strahlung von der Faserhalterung als kollimierter Strahl zu der zweiten Linse gelenkt wird, und die zweite Linse des Chipstapels derart ausgebildet ist, dass Strahlung von dem photonisch integrierten Chip als kollimierter Strahl zu der ersten Linse des Chipstapels gelenkt wird.

Der Strahlweg zwischen der ersten und der zweiten Linse verläuft vorzugsweise senkrecht zu den planen Grenzflächen zwischen den Chips des Chipstapels.

Der photonisch integrierte Chip weist bevorzugt auf: ein Substrat, dessen Substratgrundmaterial ein Halbleitermaterial, insbesondere Silizium ist, einen integrierten optischen Wellenleiter, der in zumindest einer auf dem Substrat befindlichen wellenführenden Materialschicht des Chips integriert ist, eine Umlenkeinheit, und ein Sackloch, das sich von der Substratrückseite bis zu einer das Substrat und die wellenführende Materialschicht trennenden Trennschicht erstreckt, wobei die Umlenkeinheit Strahlung des Wellenleiters aus der Ebene der wellenführenden Materialschicht in Richtung Sackloch und Substratrückseite umlenkt und Strahlung, die aus dem Chipstapel kommt und das Sackloch und die Trennschicht passiert hat, in die Ebene der wellenführenden Materialschicht umlenkt.

Die Umlenkeinheit umfasst bevorzugt einen in dem optischen Wellenleiter ausgebildeten oder mit dem optischen Wellenleiter in Verbindung stehenden Koppler und eine Spiegelschicht, die sich unmittelbar auf der dem Sackloch abgewandten Seite der wellenführenden Materialschicht, auf einer auf der dem Sackloch abgewandten Seite der wellenführenden Materialschicht aufliegenden Zwischenschicht oder auf einem auf der dem Sackloch abgewandten Seite der wellenführenden Materialschicht aufliegenden Zwischenschichtstapel befindet.

Der Koppler lenkt bevorzugt Strahlung des Wellenleiters zum Teil aus der Ebene der wellenführenden Materialschicht heraus ganz oder zumindest zum Teil in Richtung auf die Spiegelschicht um.

Die Spiegelschicht, das Sackloch und der Koppler sind vorzugsweise derart angeordnet und ausgestaltet, dass der in Richtung auf die Spiegelschicht umgelenkte Teil der Strahlung von der Spiegelschicht in Richtung Sackloch gespiegelt wird.

Das Positionierloch in dem photonisch integrierten Chip ist bevorzugt ein Sackloch, insbesondere ein Sackloch, das sich von der Substratrückseite bis zu einer das Substrat und die wellenführende Materialschicht trennenden Trennschicht erstreckt.

Die Führungsstifte weisen vorzugsweise jeweils ein angefastes Stiftende auf.

Das Bauelement weist vorzugsweise ein Stützelement auf, auf dem die Faser und/oder ein an der Faser angebrachtes Stützplättchen aufliegt.

Das Stützelement bildet vorzugsweise einen Ring. Die Innenwand des Rings verjüngt sich bevorzugt in einem oberen Bereich, in den der Stecker eingeführt ist, trichterförmig und bewirkt zumindest dort eine Vorjustage des Steckers relativ zur Steckeraufnahme beim Einführen des Steckers.

In einem unteren Bereich der Innenwand, in dem sich die Steckeraufnahme befindet, liegt die Innenwand vorzugsweise an der Steckeraufnahme seitlich an.

Auch ist es vorteilhaft, wenn das Stützelement eine Nut aufweist und die Faser oder das an der Faser angebrachte Stützplättchen in der Nut auf dem Stützelement aufliegt.

Das Stützelement wird vorzugsweise durch eine Vergussmasse gebildet.

Bezüglich der Fasermontage ist es vorteilhaft, wenn die Nut in der Faserhalterung eine in Silizium anisotrop geätzte V-Nut ist und ein der Faser zugeordneter Umlenkspiegel in der Faserhalterung durch eine anisotrop in das Silizium geätzte Fläche gebildet ist.

Der Strahlweg zwischen der ersten und der zweiten Linse trifft auf die erste und/oder zweite Linse vorzugsweise nicht zentrisch, sondern versetzt zum jeweiligen Linsenzentrum.

Die Azentrizität des Strahlwegs relativ zur ersten und zweiten Linse ist bei der ersten Linse vorzugsweise anders als bei der zweiten Linse. Eine solche unterschiedliche Azentrizität erlaubt eine linsenindividuelle Optimierung des Abbildungsverhaltens der Linse.

Die erste und/oder zweite Linse sind bevorzugt Asphären.

Die erste und/oder zweite Linse sind vorzugsweise elliptisch.

Die erste und/oder zweite Linse sind bevorzugt mit einer Anti-Reflex Schicht beschichtet.

Zumindest zwei unmittelbar aufeinander liegende Flächen der Chips des Chipstapels, insbesondere die Außenseite des Steckers und die Außenseite der Steckeraufnahme, sind vorzugsweise jeweils mit einer Anti-Reflex Schicht beschichtet.

Die Chips des Steckers und die Chips der Steckeraufnahme sind vorzugsweise klebstoff- und/oder lotfrei, insbesondere durch Van-der-Waals Bonding oder Thermal Fusion Bonding, miteinander verbunden. Eine Verbindung ohne Klebstoff gewährleistet eine optimale Wärmeleitung und der transmittierte Strahl erfährt keine Fresnelverluste.

Darüber hinaus ist es vorteilhaft, wenn der photonisch integrierte Chip auf der dem Chipstapel abgewandten Außenseite Kontakte für Flipchipverbindungen aufweist und der photonisch integrierte Chip auf einer Leiterplatte mit einem Flipchip-Verfahren gebondet und mit der Leiterplatte elektrisch verbunden ist. Durch die Separation von elektrischen und optischen Kontakten auf die Ober- und Unterseite des photonisch integrierten Chips steht auf der dortigen Chipunterseite mehr Platz für die Verbindung des photonisch integrierten Chips mit dem Chipstapel zur Verfügung als in einer alternativen Variante, bei der die optische Kontaktierung ebenfalls auf der Chipoberseite durchgeführt wird. Durch die vergrößerte Auflagefläche erhöht sich die mechanische Stabilität des Chipstapels.

Die Leiterplatte bildet vorzugsweise einen Träger für das Stützelement. Das Stützelement stabilisiert den Chipstapel zusammen mit der Faserhalterung mechanisch, wodurch geringere Verformungen und somit eine robustere optische Kopplung erreicht werden können.

Die Leiterplatte weist auf ihrer dem Stützelement abgewandten Unterseite vorzugsweise Kontakte für eine BGA (Ball-Grid-Array)-Lötverbindung auf.

Die Erfindung wird nachfolgend anhand von Ausführungsbeispielen näher erläutert; dabei zeigen beispielhaft
- Figur 1: ein Ausführungsbeispiel für ein erfindungsgemäßes optisches Bauelement in einer Explosionsdarstellung schräg von der Seite,
- Figur 2: Bestandteile des photonischen Bauelements gemäß Figur 1 näher im Detail,
- Figur 3: ein Stützelement des photonischen Bauelements gemäß Figur 1 in einer dreidimensionalen Darstellung schräg von der Seite näher im Detail,
- Figur 4: einen Stecker und eine Steckeraufnahme des photonischen Bauelements gemäß Figur 1 in einem Querschnitt, wobei die Figur 4 einen Zustand während des Einschiebens des Steckers in die Steckeraufnahme zeigt,
- Figur 5: den Stecker und die Steckeraufnahme gemäß Figur 4, nachdem der Stecker vollständig in die Steckeraufnahme eingeführt worden ist, und
- Figur 6: ein Ausführungsbeispiel für eine vorteilhafte Ausgestaltung eines photonisch integrierten Chips des photonischen Bauelements gemäß Figur 1 näher im Detail.

In den Figuren werden Übersicht halber für identische oder vergleichbare Komponenten stets dieselben Bezugszeichen verwendet.

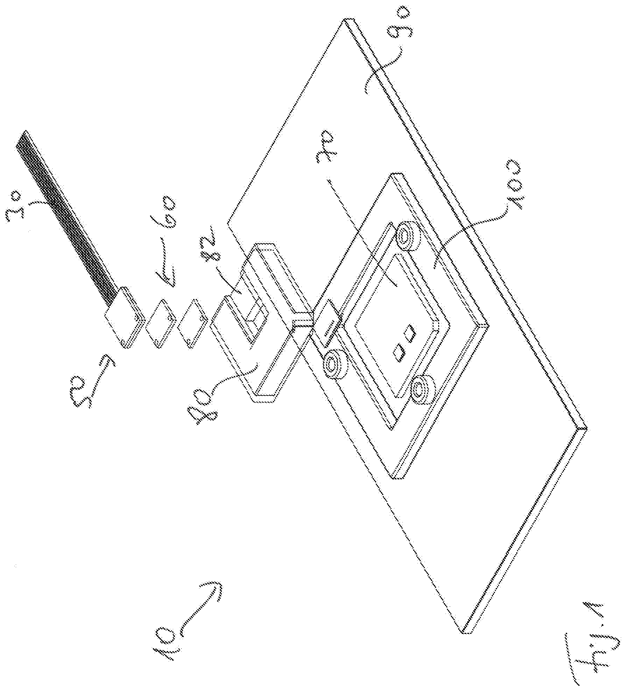

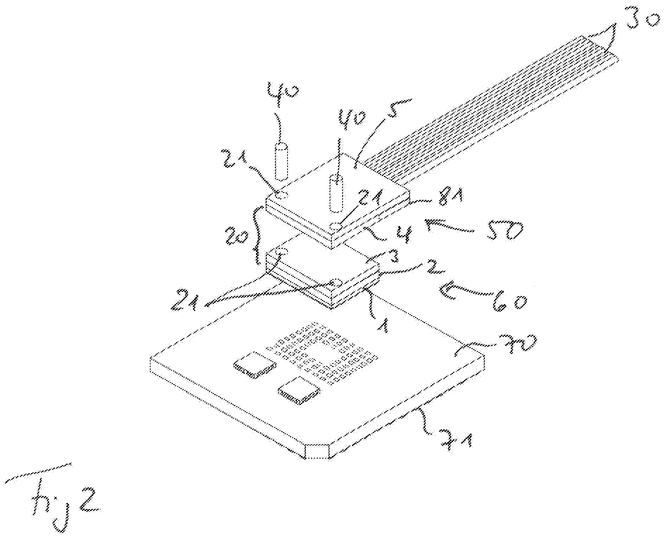

Die Figur 1 zeigt ein Ausführungsbeispiel für ein photonisches Bauelement 10 in einer Explosionsdarstellung schräg von der Seite. Die Figur 2 zeigt Komponenten des photonischen Bauelements 10 gemäß Figur 1 näher im Detail. Nachfolgend wird auf die Figuren 1 und 2 gemeinsam Bezug genommen.

Das photonische Bauelement 10 weist einen ersten Chip auf, bei dem es sich um einen photonisch integrierten Chip 1 handelt. An den photonisch integrierten Chip 1 grenzt ein zweiter Chip 2 an, der wiederum auf seiner dem photonisch integrierten Chip 1 abgewandten Seite an einen dritten Chip, nachfolgend Zwischenchip 3 genannt, angrenzt.

Ein vierter Chip 4 grenzt an einen fünften Chip, der eine Faserhalterung 5 des photonischen Bauelements 10 bildet.

Zur relativen Montage des zweiten, dritten, vierten und fünften Chips relativ zueinander, sind diese mit Durchgangslöchern 21 versehen, in die jeweils ein Führungsstift 40, vorzugsweise Metallstift, eingeschoben werden kann.

Um eine relative Justage auch zum photonisch integrierten Chip 1 mittels der Führungsstifte 40 zu ermöglichen, ist der photonisch integrierte Chip 1 vorzugweise mit fluchtenden Positionierlöchern, vorzugsweise in Form von Sacklöchern, versehen, in die die Führungsstifte 40 eingreifen können.

Der vierte Chip 4, der fünfte Chip (die Faserhalterung 5) und die Führungsstifte 40 bilden bei der Ausführungsform gemäß den Figuren 1 und 2 vorzugsweise eine vorgefertigte Einheit in Form eines Steckers 50.

Der photonisch integrierte Chip 1, der zweite Chip 2 und der Zwischenchip 3 bilden vorzugsweise eine vorgefertigte Steckeraufnahme 60, in die der Stecker 50 mit seinen Führungsstiften 40 eingeschoben werden kann. Die Führungsstifte 40 werden dabei in die Durchgangslöcher 21 in den Chips 2 und 3 sowie in die Positionierlöcher im photonisch integrierten Chip 1 eingeschoben.

Die Faserhalterung 5 dient zum Halten von Fasern 30, bei denen es sich vorzugsweise um Monomodefasern handelt.

Ist der Stecker 50 in die Steckeraufnahme 60 eingeschoben, so liegen der dritte Chip bzw. der Zwischenchip 3 und der vierte Chip 4 unmittelbar aufeinander, so dass die Chips 2, 3 und 4 einen Chipstapel 20 mit aufeinanderliegenden Chips bilden. Der Chipstapel 20 wird außen von dem photonisch integrierten Chip 1 und der Faserhalterung 5 begrenzt.

Der photonisch integrierte Chip 1 der Steckeraufnahme 60 ist auf der dem Chipstapel 20 abgewandten Außenseite vorzugsweise mit Kontakten ausgestattet, die eine Chipverbindung mit einer elektrischen Leiterplatte 70 ermöglichen.

Die Leiterplatte 70 wird vorzugsweise auf einer elektrischen Trägerplatte 90 montiert. Die Leiterplatte 70 weist zur Montage auf der elektrischen Trägerplatte 90 vorzugsweise Kontakte auf, die für eine Ball-Grid-Array-Löt-Verbindung geeignet sind. Die Kontakte befinden sich auf der dem photonisch integrierten Chip 1 abgewandten Unterseite 71 der Leiterplatte 70.

Die Figur 1 zeigt darüber hinaus ein Stützelement 80, das auf die Leiterplatte 70 aufgesetzt ist. Das Stützelement 80 wird vorzugsweise durch eine Vergussmasse gebildet und hat vorzugsweise zwei Funktionen: Eine der beiden Funktionen besteht darin, die Fasern 30 bzw. ein zum Halten der Fasern 30 an der Faserhalterung 5 vorgesehenes Stützplättchen 81 (zum Beispiel in Form eines sechsten Chips) abzustützen. Hierfür weist das Stützelement 80 vorzugsweise eine geeignete Nut 82 auf. Die andere der beiden Funktionen des Stützelements 80 besteht darin, eine Vorjustage des Steckers 50 relativ zur Steckeraufnahme 60 zu bewirken, wenn der Stecker 50 in die Steckeraufnahme 60 eingeführt werden soll. Zu diesem Zweck ist das Stützelement 80 ringförmig ausgebildet.

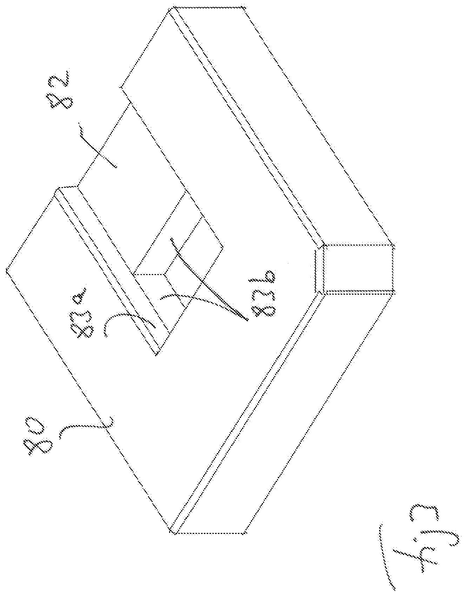

Das Stützelement 80 ist deutlicher in der Figur 3 dargestellt. Es lässt sich erkennen, dass die Innenwand 83 des durch das Stützelement 80 gebildeten Rings einen oberen Bereich 83a aufweist, der sich trichterförmig verjüngt und somit beim Einführen des Steckers 50 eine relative Justage des Steckers relativ zu dem Innenbereich des Stützelements 80 und der darin befindlichen Steckeraufnahme 60 bewirkt.

In einem unteren Bereich 83b liegt die Innenwand 83 seitlich an der darin befindlichen Steckeraufnahme 60 (vgl. Figuren 1 und 2) an. Im unteren Bereich 83b steht die Innenwand 83 des Stützelements 80 vorzugsweise senkrecht auf der Oberflächenebene der darunter befindlichen Leiterplatte 70.

Die Figur 1 zeigt darüber hinaus einen Trägerring 100, in dessen Innenringbereich die elektrische Trägerplatte 90 mit dem darauf befindlichen Stützelement 80 eingesetzt sind. Der Trägerring 100 dient beispielsweise dazu, einen in den Figuren nicht gezeigten Kühlkörper zu tragen, der die Leiterplatte 70 und die elektrische Trägerplatte 90 kühlt bzw. "entwärmt".

Das Stützelement 80 wird vorzugsweise durch Ausgießen des Innenringbereichs zwischen der Steckeraufnahme 60 und dem Innenrand des Trägerrings 100 gebildet. Der obere Bereich 83a der Innenwand 83 kann beispielsweise durch eine Entformungsschräge der das Stützelement 80 bildenden Vergussmasse gebildet sein.

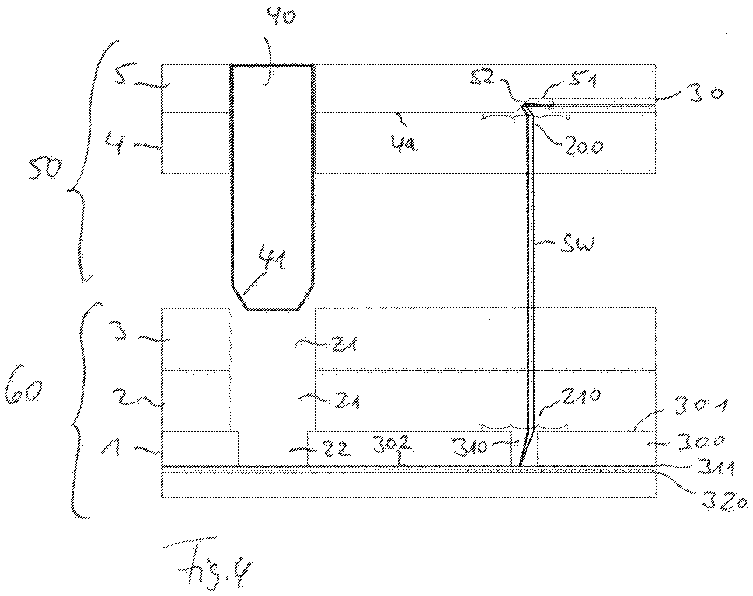

Die Figur 4 zeigt den Stecker 50 und die Steckeraufnahme 60 gemäß den Figuren 1 und 2 näher im Detail.

In der Figur 4 lässt sich erkennen, dass der Stecker 50 durch die Führungsstifte 40, den vierten Chip 4 sowie den darüber befindlichen fünften Chip (Faserhalterung 5) gebildet wird. An den Stecker 50 sind die Fasern 30 gemäß Figur 2 angeschlossen, von denen in der Querschnittsdarstellung gemäß Figur 4 nur eine einzige erkennbar ist. Man sieht, dass die Faser 30 in einer V-Nut 51 liegt, die in das Siliziummaterial der Faserhalterung 5 eingeätzt ist.

Zur Umlenkung von Strahlung, die aus der Faser 30 ausgekoppelt bzw. in diese eingekoppelt wird, weist die Faserhalterung 5 für jede der Fasern 30 jeweils einen zugeordneten Umlenkspiegel 52 auf, der durch eine anisotrop in das Siliziummaterial des fünften Chips bzw. der Faserhalterung 5 geätzte Spiegelfläche gebildet ist.

In der Figur 4 lässt sich darüber hinaus eine Linse, nachfolgend erste Linse 200 genannt, erkennen, die in die an die Faserhalterung 5 angrenzende Außenfläche 4a des vierten Chips 4 eingebracht, vorzugsweise eingeätzt, ist. Zusätzlich zu der ersten Linse 200 können in die Außenfläche 4a auch weitere erste Linsen eingebracht, insbesondere eingeätzt, sein, beispielsweise für Strahlung in oder aus einer anderen der Fasern, die in den Figuren 1 und 2 gezeigt sind.

Die erste Linse 200 kooperiert mit einer zweiten Linse 210, die an der an den photonisch integrierten Chip 1 angrenzenden Außenfläche 2a des zweiten Chips 2 eingebracht, insbesondere eingeätzt, ist. An der Außenfläche 2a können neben der zweiten Linse 210 noch weitere zweite Linsen eingebracht, insbesondere eingeätzt, wiederum beispielsweise für Strahlung in oder aus einer anderen der Fasern, die in den Figuren 1 und 2 gezeigt sind.

Die erste Linse 200 und die zweite Linse 210 liegen vorzugsweise einander unmittelbar gegenüber und bilden vorzugsweise einen gemeinsamen Strahlweg SW; auf dem Strahlweg SW formt die Strahlung zwischen den beiden Linsen 200 und 210 vorzugsweise einen kollimierten Strahl. Bei den Linsen 200 und 210 handelt es sich vorzugsweise um Sammellinsen.

Die Figur 4 lässt darüber hinaus den Aufbau des photonisch integrierten Chips 1 näher erkennen. Der photonisch integrierte Chip 1 weist ein Substrat 300, vorzugsweise ein Siliziumsubstrat, auf, dessen Substratrückseite 301 an den in der Figur 4 darüber befindlichen zweiten Chip 2 grenzt. Im Bereich der zweiten Linse 210 ist das Substrat 300 mit einem Sackloch 310 versehen, das sich von der Substratrückseite 301 bis zu einer Trennschicht 311 erstreckt, die auf der Substratvorderseite 302 des Substrats 300 aufgebracht ist. Bei der Trennschicht 311 handelt es sich vorzugsweise um SiO2-Material.

Auf der dem Sackloch 310 abgewandten Seite der Trennschicht 311 befindet sich eine wellenführende Materialschicht 320 aus vorzugsweise Silizium. Strahlung, die aus der wellenführenden Materialschicht 320 mittels einer in der Figur 4 nicht näher gezeigten Umlenkeinheit in Richtung des Substrats 300 ausgekoppelt wird, passiert das Sackloch 310 und wird mittels der zweiten Linse 210 in Richtung auf die erste Linse 200 gelenkt. Die erste Linse 200 lenkt die Strahlung S auf den Umlenkspiegel 52, der die Strahlung S in die Faser 30 einkoppelt.

Strahlung der Faser 30 gelangt über den Umlenkspiegel, die erste Linse 200, die zweite Linse 210, das Sackloch 310 sowie die Umlenkeinheit in entsprechender Weise in die wellenführende Materialschicht 320.

Die Figur 4 zeigt darüber hinaus den Aufbau der Steckeraufnahme 60 näher im Detail. Es lässt sich erkennen, dass der zweite Chip 2 und der dritte Chip (Zwischenchip 3) jeweils mit einem Durchgangsloch 21 versehen sind, durch die ein angefastes Stiftende 41 des Führungsstifts 40 in Richtung auf das Substrat 30 des photonisch integrierten Chips 1 geschoben werden kann.

Vorzugsweise weist das Substrat 300 des photonisch integrierten Chips 1 Positionierlöcher 22 in Form von Sacklöchern 310 auf, in die jeweils das angefaste Stiftende 41 eines Führungsstifts 40 eingeschoben werden kann, um eine Justage des Steckers 50 nicht nur relativ zum zweiten und dritten Chip, sondern auch relativ zum photonisch integrierten Chip 1 sicherzustellen. Die angefasten Stiftenden 41 erleichtern das Einführen der Führungsstifte 40 sowie die Zentrierung der Führungsstifte 40 in den Durchgangslöchern 21 bzw. den Positionierlöchern 22.

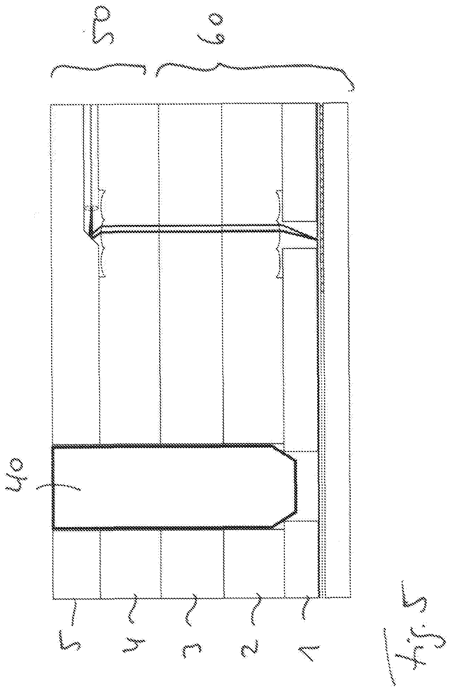

Die Figur 5 zeigt den Stecker 50 und die Steckeraufnahme 60 gemäß Figur 4, nachdem der Stecker 50 mit seinen Führungsstiften 40 vollständig in die Steckeraufnahme 60 eingeführt worden ist. Das lässt sich daran erkennen, dass die Stiftenden 41 der Führungsstifte 40 das jeweilige Positionierloch 22 im Substrat 300 des photonisch integrierten Chips erreicht haben.

Nach dem Zusammenstecken von Stecker 50 und Steckeraufnahme 60 bilden die Chips 2 bis 4 den Chipstapel 20 gemäß Figur 2.

Der vierte Chip 4 und der fünfte Chip (die Faserhalterung 5) sind zur Bildung des Steckers 50 vorzugsweise klebstoff- und/oder lötfrei miteinander verbunden, insbesondere durch Van-der-Waals Bonding oder Thermal-Fusion Bonding.

Der photonisch integrierte Chip 1, der zweite Chip 2 und der dritte Chip (Zwischenchip 3) sind zur Bildung der Steckeraufnahme 60 vorzugsweise ebenfalls klebstoff- und/oder lötfrei miteinander verbunden, insbesondere durch Van-der-Waals Bonding oder Thermal-Fusion Bonding.

Die Außenseite des Steckers 50, die bei dem Ausführungsbeispiel gemäß den Figuren 1 bis 4 durch die der Steckeraufnahme 60 zugewandten Außenfläche des vierten Chips 4 gebildet ist, ist vorzugsweise plan und mit einer Antireflexionsschicht beschichtet. In entsprechender Weise ist es vorteilhaft, wenn auch die dem vierten Chip zugewandte Außenseite des dritten Chips (Zwischenchips 3) plan ist und mit einer Antireflexionsschicht beschichtet ist.

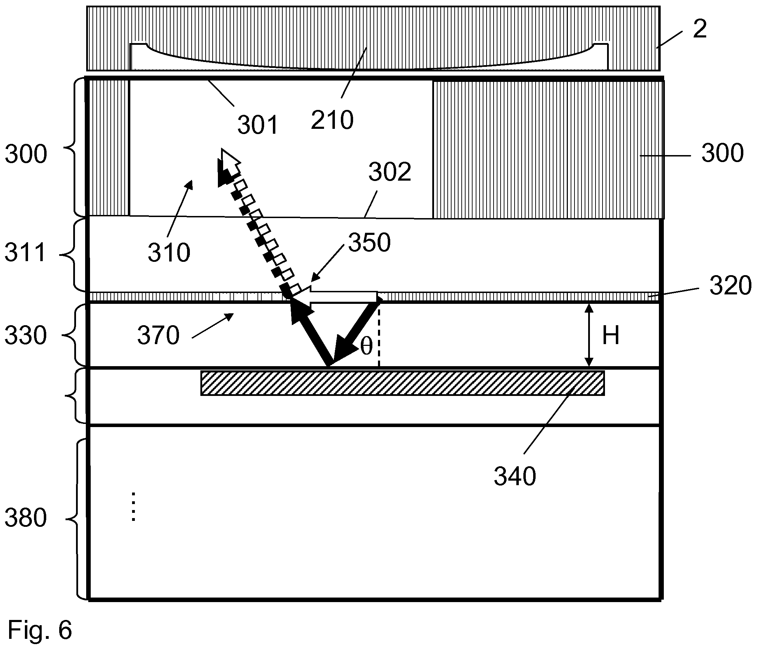

Die Figur 6 zeigt den bereits im Zusammenhang mit der Figur 4 erläuterten Aufbau des photonisch integrierten Chips 1 näher im Detail. Man erkennt das Substrat 300, die Trennschicht 311 und die wellenführende Materialschicht 320, die bereits im Zusammenhang mit der Figur 4 erläutert worden sind. Darüber hinaus erkennt man in der Figur 6 eine Zwischenschicht 330, die auf der dem Sackloch 310 abgewandten Seite der wellenführenden Materialschicht 320 aufgebracht ist.

Die Zwischenschicht 330 weist eine Dicke H auf und trennt die wellenführende Materialschicht 320 von einer Spiegelschicht 340 (z. B. Metallschicht), die auf der dem Sackloch 310 abgewandten Seite der Zwischenschicht 330 angeordnet ist.

Die Figur 6 zeigt darüber hinaus einen Koppler 350, der in der wellenführenden Materialschicht 320 ausgebildet oder mit einem in der wellenführenden Materialschicht 320 ausgebildeten optischen Wellenleiter 360 in Verbindung steht.

Der Koppler 350 und die Spiegelschicht 340 bilden eine Umlenkeinheit 370, die Strahlung vom Wellenleiter 360 in Richtung des Sacklochs 310 bzw. in Richtung der zweiten Linse 210 umlenken kann. In entsprechender Weise kann die Umlenkeinheit 370 Strahlung, die von der zweiten Linse 210 bzw. dem Sackloch 310 kommt, in die wellenführende Materialschicht 320 bzw. in den optischen Wellenleiter 360 einkoppeln. Das Ein- und Auskoppeln in Richtung Sackloch 310 bzw. wellenführende Materialschicht 320 erfolgt zum Teil unmittelbar bzw. direkt und zum Teil mittelbar über die Spiegelschicht 340 bzw. indirekt, wie in Figur 6 durch Pfeile angedeutet ist.

Im Backend-of-Line 380, also in weiteren Schichten auf der Oberseite des photonisch integrierten Chips 1, können zur Bildung der Umlenkeinheit 370 und/oder zu anderen Zwecken weitere Spiegel- und/oder Metallschichten integriert sein.

## Patentansprüche

1. Photonisches Bauelement (10) mit einem photonisch integrierten Chip (1) und einer mit dem photonisch integrierten Chip (1) mechanisch verbundenen Faserhalterung (5), wobei die Faserhalterung (5) aufweist:
- zumindest eine Nut (52), in die eine optische Faser (30), insbesondere Monomodefaser, eingelegt ist, und
- zumindest eine Spiegelfläche (52), die Strahlung (S) der Faser (30) in Richtung des photonisch integrierten Chips (1) und/oder Strahlung (S) des photonisch integrierten Chips (1) in Richtung der Faser (30) spiegelt,
wobei
- zwischen dem photonisch integrierten Chip (1) und der Faserhalterung (5) ein Chipstapel (20) mit zumindest zwei Chips angeordnet ist, von denen einer an die Faserhalterung (5) grenzt und einer an den photonisch integrierten Chip (1),
- der Chipstapel (20) mit zumindest zwei Durchgangslöchern (21) versehen ist,
- durch die zumindest zwei Durchgangslöcher (21) des Chipstapels (20) jeweils ein Führungsstift (40) hindurchgeführt ist, der sich in ein zugeordnetes Positionierloch in der Faserhalterung (5) und in Richtung des photonisch integrierten Chips (1) erstreckt und zumindest den Chipstapel (20) und die Faserhalterung (5) relativ zueinander positioniert,
- die Faserhalterung (5), der Chip (4) des Chipstapels (20), der an die Faserhalterung (5) grenzt, und die Führungsstifte (40) fest miteinander verbunden sind und gemeinsam einen Stecker (50) bilden und
- der photonisch integrierte Chip (1) und der Chip (2), der an den photonisch integrierten Chip (1) grenzt, fest miteinander verbunden sind und eine Steckeraufnahme (60), insbesondere Buchse, bilden, und
- die Führungsstifte (40) des Steckers (50) in die Steckeraufnahme (60) eingeschoben sind.

2. Photonisches Bauelement nach Anspruch 1,
**dadurch gekennzeichnet, dass**
- durch die zumindest zwei Durchgangslöcher (21) des Chipstapels (20) jeweils ein Führungsstift (40) hindurchgeführt ist, der sich in ein zugeordnetes Positionierloch in der Faserhalterung (5) und ein zugeordnetes Positionierloch (22) in dem photonisch integrierten Chip (1) erstreckt und den photonisch integrierten Chip (1), den Chipstapel (20) und die Faserhalterung (5) relativ zueinander positioniert, und
- die Durchgangslöcher (21) des Chipstapels (20) und die zugeordneten Positionierlöcher (22) fluchten.

3. Photonisches Bauelement nach einem der voranstehenden Ansprüche,
**dadurch gekennzeichnet, dass**
- der Chip des Chipstapels (20), der an die Faserhalterung (5) grenzt, an seiner der Faserhalterung (5) zugewandten Chipseite mit mindestens einer Linse, nachfolgend erste Linse (200) des Chipstapels (20) genannt, versehen ist,
- der Chip des Chipstapels (20), der an den photonisch integrierten Chip (1) grenzt, an seiner dem photonisch integrierten Chip (1) zugewandten Chipseite ebenfalls mit mindestens einer Linse, nachfolgend zweite Linse (210) des Chipstapels (20) genannt, versehen ist und
- die erste und zweite Linse (200, 210) einen gemeinsamen Strahlweg (SW) durch den Chipstapel (20) begrenzen.

4. Photonisches Bauelement nach Anspruch 3,
**dadurch gekennzeichnet, dass**
die Abweichung zwischen der optischen Weglänge zwischen der Linsenoberfläche der ersten Linse (200) und der Faser (30) und der optischen Weglänge zwischen der Linsenoberfläche der zweiten Linse (210) und einem Koppler (350) des photonisch integrierten Chips (1) kleiner als 5 % und/oder kleiner als die doppelte Rayleighlänge des durch die erste Linse (200) fokussierten Strahls ist.

5. Photonisches Bauelement nach einem der voranstehenden Ansprüche,
**dadurch gekennzeichnet, dass**
die Chips des Chipstapels (20), der photonisch integrierte Chip (1) und die Faserhalterung (5) Siliziumchips sind.

6. Photonisches Bauelement nach einem der voranstehenden Ansprüche,
**dadurch gekennzeichnet, dass**
- der Chipstapel (20) zumindest einen Zwischenchip (3) aufweist, der zwischen den beiden bereits erwähnten äußeren Chips des Chipstapels (20) angeordnet ist und ebenfalls zumindest zwei zugeordnete Durchgangslöcher (21) für die Führungsstifte (40) aufweist, und
der oder die Zwischenchips (3) einen Bestandteil des Steckers (50) oder der Steckeraufnahme (60) bilden.

7. Photonisches Bauelement nach Anspruch 6,
**dadurch gekennzeichnet, dass**
- die auf der Steckeraufnahme (60) aufliegende Steckerfläche des Steckers (50) plan ist, wobei die Steckerfläche durch die der Steckeraufnahme (60) zugewandte Oberfläche desjenigen Chips (4), der an die Faserhalterung (5) grenzt, oder des oder eines der Zwischenchips (3) gebildet ist, und
- die auf dem Stecker (50) aufliegende Fläche der Steckeraufnahme (60) plan ist, wobei diese Fläche durch die dem Stecker (50) zugewandte Oberfläche desjenigen Chips (2), der an den photonisch integrierten Chip (1) grenzt, oder des oder eines der Zwischenchips (3) gebildet ist.

8. Photonisches Bauelement nach einem der voranstehenden Ansprüche,
**dadurch gekennzeichnet, dass**
- die beiden Linsen (200, 210) die gleiche Fokuslänge aufweisen, insbesondere identisch sind
- der Strahlweg (SW) zwischen der ersten und der zweiten Linse (200, 210) senkrecht zu den planen Grenzflächen zwischen den Chips (2-4) des Chipstapels (20) verläuft.

9. Photonisches Bauelement nach einem der voranstehenden Ansprüche,
**dadurch gekennzeichnet, dass**
- die erste Linse (200) des Chipstapels (20) derart ausgebildet ist, dass Strahlung (S) von der Faserhalterung (5) als kollimierter Strahl zu der zweiten Linse (210) gelenkt wird, und
- die zweite Linse (210) des Chipstapels (20) derart ausgebildet ist, dass Strahlung (S) von dem photonisch integrierten Chip (1) als kollimierter Strahl zu der ersten Linse (200) des Chipstapels (20) gelenkt wird.
- der Strahlweg (SW) zwischen der ersten und der zweiten Linse (200, 210) auf die erste und/oder zweite Linse (200, 210) nicht zentrisch, sondern versetzt zum jeweiligen Linsenzentrum trifft.

10. Photonisches Bauelement nach einem der voranstehenden Ansprüche,
**dadurch gekennzeichnet, dass**
der photonisch integrierte Chip (1) aufweist:
- ein Substrat (300), dessen Substratgrundmaterial ein Halbleitermaterial, insbesondere Silizium ist,
- einen integrierten optischen Wellenleiter (360), der in zumindest einer auf dem Substrat (300) befindlichen wellenführenden Materialschicht (320) des Chips integriert ist,
- eine Umlenkeinheit (370), und
- ein Sackloch (310), das sich von der Substratrückseite (301) bis zu einer das Substrat (300) und die wellenführende Materialschicht (320) trennenden Trennschicht (311) erstreckt,

11. Photonisches Bauelement nach einem der voranstehenden Ansprüche,
**dadurch gekennzeichnet, dass**
- das Bauelement ein Stützelement (80), insbesondere in Form eines Vergusselements, aufweist, auf dem die Faser (30) und/oder ein an der Faser (30) angebrachtes Stützplättchen (82) aufliegt,
- das Stützelement (80) einen Ring bildet und
- die Innenwand (83) des Rings sich in einem oberen Bereich (83a), in den der Stecker (50) eingeführt ist, trichterförmig verjüngt und eine Vorjustage des Steckers (50) relativ zur Steckeraufnahme (60) beim Einführen des Steckers (50) bewirkt und in einem unteren Bereich (83b), in dem sich die Steckeraufnahme (60) befindet, an dieser seitlich anliegt, und/oder
- das Stützelement (80) eine Nut (82) aufweist und die Faser (30) oder das an der Faser (30) angebrachte Stützplättchen (82) in der Nut (82) auf dem Stützelement (80) aufliegt.

12. Photonisches Bauelement nach einem der voranstehenden Ansprüche,
**dadurch gekennzeichnet, dass**
die Nut (52) in der Faserhalterung (5) eine in Silizium anisotrop geätzte V-Nut (52) ist und ein der Faser (30) zugeordneter Umlenkspiegel (52) in der Faserhalterung (5) durch eine anisotrop in das Silizium geätzte Fläche gebildet ist.

## Claims

1. Photonic component (10) having a photonic integrated chip (1) and a fibre mount (5) mechanically connected to the photonic integrated chip (1), wherein the fibre mount (5) comprises:
- at least one groove (52), into which an optical fibre (30), in particular single-mode fibre, is inserted, and
- at least one mirror surface (52), which reflects radiation (S) of the fibre (30) in the direction of the photonic integrated chip (1) and/or reflects radiation (S) of the photonic integrated chip (1) in the direction of the fibre (30),
wherein
- a chip stack (20) having at least two chips, of which one borders the fibre mount (5) and one borders the photonic integrated chip (1), is arranged between the photonic integrated chip (1) and the fibre mount (5),
- the chip stack (20) is provided with at least two through holes (21),
- one guide pin (40) is guided through each of the at least two through holes (21) of the chip stack (20), which guide pin extends into an associated positioning hole in the fibre mount (5) and in the direction of the photonic integrated chip (1) and positions at least the chip stack (20) and the fibre mount (5) in relation to one another,
- the fibre mount (5), the chip (4) of the chip stack (20) which borders the fibre mount (5) and the guide pins (40) are fixedly connected to one another and jointly form a plug (50), and
- the photonic integrated chip (1) and the chip (2) which borders the photonic integrated chip (1) are fixedly connected to one another and form a plug receptacle (60), in particular a socket, and
- the guide pins (40) of the plug (50) are inserted into the plug receptacle (60).

2. Photonic component according to Claim 1,
**characterized in that**
- one guide pin (40) is guided through each of the at least two through holes (21) of the chip stack (20), which guide pin extends into an associated positioning hole in the fibre mount (5) and an associated positioning hole (22) in the photonic integrated chip (1) and positions the photonic integrated chip (1), the chip stack (20) and the fibre mount (5) in relation to one another, and
- the through holes (21) of the chip stack (20) and the associated positioning holes (22) align.

3. Photonic component according to any one of the preceding claims,
**characterized in that**
- the chip of the chip stack (20) which borders the fibre mount (5) is provided on its chip side facing toward the fibre mount (5) with at least one lens, referred to hereafter as the first lens (200) of the chip stack (20),
- the chip of the chip stack (20) which borders the photonic integrated chip (1) is also provided on its chip side facing toward the photonic integrated chip (1) with at least one lens, referred to hereafter as the second lens (210) of the chip stack (20), and
- the first and second lenses (200, 210) delimit a common beam path (SW) through the chip stack (20).

4. Photonic component according to Claim 3,
**characterized in that**
the deviation between the optical path length between the lens surface of the first lens (200) and the fibre (30) and the optical path length between the lens surface of the second lens (210) and a coupler (350) of the photonic integrated chip (1) is less than 5% and/or less than twice the Rayleigh length of the beam focused by the first lens (200).

5. Photonic component according to any one of the preceding claims,
**characterized in that**
the chips of the chip stack (20), the photonic integrated chip (1) and the fibre mount (5) are silicon chips.

6. Photonic component according to any one of the preceding claims,
**characterized in that**
- the chip stack (20) comprises at least one intermediate chip (3), which is arranged between the two above-mentioned outer chips of the chip stack (20) and also comprises at least two associated through holes (21) for the guide pins (40), and
the intermediate chip(s) (3) form(s) part of the plug (50) or of the plug receptacle (60).

7. Photonic component according to Claim 6,
**characterized in that**
- the plug face of the plug (50) resting on the plug receptacle (60) is planar, wherein the plug face is formed by the surface facing toward the plug receptacle (60) of that chip (4) which borders the fibre mount (5), or of the or one of the intermediate chip(s) (3), and
- the face of the plug receptacle (60) resting on the plug (50) is planar, wherein this face is formed by the surface facing toward the plug (50) of that chip (2) which borders the photonic integrated chip (1), or of the or one of the intermediate chip(s) (3).

8. Photonic component according to any one of the preceding claims,
**characterized in that**
- the two lenses (200, 210) have the same focal length, in particular are identical,
- the beam path (SW) between the first and second lenses (200, 210) extends perpendicularly in relation to the planar interfaces between the chips (2-4) of the chip stack (20).

9. Photonic component according to any one of the preceding claims,
**characterized in that**
- the first lens (200) of the chip stack (20) is designed in such a way that radiation (S) from the fibre mount (5) is guided as a collimated beam to the second lens (210), and
- the second lens (210) of the chip stack (20) is designed in such a way that radiation (S) from the photonic integrated chip (1) is guided as a collimated beam to the first lens (200) of the chip stack (20),
- the beam path (SW) between the first and second lenses (200, 210) is not incident centrally on the first and/or second lens (200, 210), but rather offset in relation to the respective lens centre.

10. Photonic component according to any one of the preceding claims,
**characterized in that**
the photonic integrated chip (1) comprises:
- a substrate (300), the substrate base material of which is a semiconductor material, in particular silicon,
- an integrated optical waveguide (360), which is integrated into at least one waveguiding material layer (320) of the chip located on the substrate (300),
- a deflection unit (370), and
- a pocket hole (310), which extends from the substrate rear side (301) up to a partition layer (311) separating the substrate (300) and the waveguiding material layer (320).

11. Photonic component according to any one of the preceding claims,
**characterized in that**
- the component comprises a support element (80), in particular in the form of a potting element, on which the fibre (30) and/or a support slat (82) attached to the fibre (30) rest(s),
- the support element (80) forms a ring, and
- the inner wall (83) of the ring tapers in a funnel shape in an upper region (83a), into which the plug (50) is inserted, and effects a pre-alignment of the plug (50) in relation to the plug receptacle (60) during the insertion of the plug (50) and, in a lower region (83b), in which the plug receptacle (60) is located, abuts laterally thereon, and/or
- the support element (80) comprises a groove (82) and the fibre (30) or the support slat (82) attached to the fibre (30) rests in the groove (82) on the support element (80).

12. Photonic component according to any one of the preceding claims,
**characterized in that**
the groove (52) in the fibre mount (5) is a V-groove (52) anisotropically etched in silicon and a deflection mirror (52) associated with the fibre (30) is formed in the fibre mount (5) by a face etched anisotropically into the silicon.

## Revendications

1. Composant photonique (10), comprenant une puce intégrée photonique (1) et un support de fibre (5) relié mécaniquement à la puce intégrée photonique (1), le support de fibre (5) présentant :
- au moins une rainure (52) dans laquelle est placée une fibre optique (30), en particulier une fibre monomode, et
- au moins une surface miroir (52) qui réfléchit le rayonnement (S) de la fibre (30) en direction de la puce intégrée photonique (1) et/ou le rayonnement (S) de la puce intégrée photonique (1) en direction de la fibre (30), dans lequel
- entre la puce intégrée photonique (1) et le support de fibre (5) est disposé un empilement de puces (20) comprenant au moins deux puces dont une est adjacente au support de fibre (5) et une autre est adjacente à la puce intégrée photonique (1),
- l'empilement de puces (20) est pourvu d'au moins deux trous traversants (21),
- à travers les au moins deux trous traversants (21) de l'empilement de puces (20) passe respectivement une broche de guidage (40) qui s'étend dans un trou de positionnement associé dans le support de fibre (5) et en direction de la puce intégrée photonique (1) et positionne au moins l'empilement de puces (20) et le support de fibre (5) l'un par rapport à l'autre,
- le support de fibre (5), la puce (4) de l'empilement de puces (20) qui est adjacente au support de fibre (5), et les broches de guidage (40) sont reliés solidement ensemble et constituent ensemble un connecteur (50), et
- la puce intégrée photonique (1) et la puce (2) qui est adjacente à la puce intégrée photonique (1) sont reliées solidement ensemble, et constituent un connecteur femelle (60), en particulier une prise femelle, et
- les broches de guidage (40) du connecteur (50) sont insérées dans le connecteur femelle (60).

2. Composant photonique selon la revendication 1, **caractérisé en ce que**
- à travers les au moins deux trous traversants (21) de l'empilement de puces (20) passe respectivement une broche de guidage (40) qui s'étend dans un trou de positionnement associé dans le support de fibre (5) et dans un trou de positionnement (22) associé dans la puce intégrée photonique (1) et positionne la puce intégrée photonique (1), l'empilement de puces (20) et le support de fibre (5) les uns par rapport aux autres, et
- les trous traversants (21) de l'empilement de puces (20) et les trous de positionnement (22) associés sont alignés.

3. Composant photonique selon l'une quelconque des revendications précédentes, **caractérisé en ce que**
- la puce de l'empilement de puces (20) qui est adjacente au support de fibre (5) est pourvue sur sa face de puce tournée vers le support de fibre (5) d'au moins une lentille, ci-après appelée la première lentille (200), de l'empilement de puces (20),
- la puce de l'empilement de puces (20) qui est adjacente à la puce intégrée photonique (1) est également pourvue sur sa face de puce tournée vers la puce intégrée photonique (1) d'au moins une lentille, ci-après appelée la deuxième lentille (210) de l'empilement de puces (20), et
- la première et la deuxième lentille (200, 210) délimitent un trajet de faisceau commun (SW) à travers l'empilement de puces (20).

4. Composant photonique selon la revendication 3,
**caractérisé en ce que**
l'écart entre la longueur de trajet optique entre la surface de lentille de la première lentille (200) et la fibre (30) et la longueur de trajet optique entre la surface de lentille de la deuxième lentille (210) et un coupleur (350) de la puce intégrée photonique (1) est inférieur à 5 % et/ou inférieur à deux fois la longueur de Rayleigh du faisceau focalisé à travers la première lentille (200).

5. Composant photonique selon l'une quelconque des revendications précédentes, **caractérisé en ce que** les puces de l'empilement de puces (20), la puce intégrée photonique (1) et le support de fibre (5) sont des puces de silicium.

6. Composant photonique selon l'une quelconque des revendications précédentes, **caractérisé en ce que**
- l'empilement de puces (20) présente au moins une puce intermédiaire (3) qui est disposée entre les puces extérieures déjà mentionnées de l'empilement de puces (20) et présente également au moins deux trous traversants (21) associés pour les broches de guidage (40), et la ou les puces intermédiaires (3) constituent un composant du connecteur (50) ou du connecteur femelle (60).

7. Composant photonique selon la revendication 6,
**caractérisé en ce que**
- la surface de connecteur du connecteur (50) reposant sur le connecteur femelle (60) est plane, la surface de connecteur étant formée par la surface tournée vers le connecteur femelle (60) de la puce (4) à laquelle le support de fibre (5) est adjacent, ou de la ou d'une des puces intermédiaires (3), et
- la surface du connecteur femelle (60) reposant sur le connecteur (50) est plane, cette surface étant formée par la surface, tournée vers le connecteur (50), de la puce (2) qui est adjacente à la puce intégrée photonique (1) ou de la ou d'une des puces intermédiaires (3).

8. Composant photonique selon l'une quelconque des revendications précédentes, **caractérisé en ce que**
- les deux lentilles (200, 210) présentent la même focale, étant en particulier identiques,
- le trajet de faisceau (SW) entre la première et la deuxième lentille (200, 210) s'étend perpendiculairement aux surfaces limites planes entre les puces (2-4) de l'empilement de puces (20).

9. Composant photonique selon l'une quelconque des revendications précédentes, **caractérisé en ce que**
- la première lentille (200) de l'empilement de puces (20) est réalisée de telle sorte que le rayonnement (S) du support de fibre (5) est dirigé sous forme de faisceau collimaté vers la deuxième lentille (210), et
- la deuxième lentille (210) de l'empilement de puces (20) est réalisée de telle sorte que le rayonnement (S) de la puce intégrée photonique (1) est dirigé sous forme de faisceau collimaté vers la première lentille (200) de l'empilement de puces (20),
- le trajet de faisceau (SW) entre la première et la deuxième lentille (200, 210) n'est pas incidente de manière centrée sur la première et/ou la deuxième lentille (200, 210) mais de manière décalée vers le centre de lentille respectif.

10. Composant photonique selon l'une quelconque des revendications précédentes, **caractérisé en ce que** la puce intégrée photonique (1) présente :
- un substrat (300) dont la matière de base de substrat est une matière semi-conductrice, en particulier du silicium,
- un guide d'ondes optique (360) intégré qui est intégré dans au moins une couche de matière (320) de la puce, guidant des ondes et se trouvant sur le substrat (300),
- une unité de déviation (370), et
- un trou borgne (310) qui s'étend de la face arrière de substrat (301) à une couche de séparation (311) séparant le substrat (300) et la couche de matériau (320) guidant des ondes.

11. Composant photonique selon l'une quelconque des revendications précédentes, **caractérisé en ce que**
- le composant présente un élément d'appui (80), en particulier sous la forme d'un élément de scellement, sur lequel repose la fibre (30) et/ou une plaquette d'appui (82) fixée à la fibre (30),
- l'élément d'appui (80) forme un anneau, et
- la paroi intérieure (83) de l'anneau s'amincit en forme d'entonnoir dans une zone supérieure (83a) dans laquelle le connecteur (50) est introduit, et provoque un pré-ajustage du connecteur (50) par rapport au connecteur femelle (60) lors de l'introduction du connecteur (50), et est latéralement adjacente dans une zone inférieure (83b) dans laquelle se trouve le connecteur femelle (60), et/ou
- l'élément d'appui (80) présente une rainure (82), et la fibre (30) ou la plaquette d'appui (82) fixée à la fibre (30) repose dans la rainure (82) sur l'élément d'appui (80).

12. Composant photonique selon l'une quelconque des revendications précédentes, **caractérisé en ce que** la rainure (52) dans le support de fibre (5) est une rainure en V (52) gravée de manière anisotrope dans le silicium, et un miroir de déviation (52) associé à la fibre (30) est formé dans le support de fibre (5) par une surface gravée de manière anisotrope dans le silicium.
